# EUROPÄISCHE PATENTSCHRIFT

(11) **EP 2 247 927 B1**
(45) Veröffentlichungstag und Bekanntmachung des Hinweises auf die Patenterteilung: **20.09.2017**
(21) Anmeldenummer: 09711764.2
(22) Anmeldetag: 22.01.2009
(51) Int. Cl.: G01F 23/296, B01L 3/02, G01N 29/11, G01N 35/10, G01N 29/032, G01N 29/24, G01N 29/30

(54) **VERFAHREN ZUR ZUSTANDSÜBERPRÜFUNG EINER PIPETTE, PIPETTIERVERFAHREN, PIPETTIERVORRICHTUNG UND SAUGROHR FÜR EINE PIPETTIERVORRICHTUNG**
METHOD FOR CHECKING THE STATE OF A PIPETTE, PIPETTING METHOD, PIPETTING DEVICE, AND SUCTION TUBE FOR A PIPETTING DEVICE
PROCÉDÉ PERMETTANT DE CONTRÔLER L'ÉTAT D'UNE PIPETTE, PROCÉDÉ DE PIPETTAGE, DISPOSITIF DE PIPETTAGE, ET TUBE D'ASPIRATION POUR DISPOSITIF DE PIPETTAGE

(30) Priorität: 18.02.2008 DE 102008009626
(43) Veröffentlichungstag der Anmeldung: 10.11.2010
(73) Patentinhaber: Beckman Coulter, Inc., Brea, CA 92821 (US)
(72) Erfinder: WASSERMEIER, Matthias, 81825 München (DE); VON GUTTENBERG, Zeno, 81373 München (DE); RÖHRS, Frido, 20251 Hamburg (DE)
(74) Vertreter: Müller-Boré & Partner Patentanwälte PartG mbB
(86) Internationale Anmeldenummer: PCT/EP2009/000380
(87) Internationale Veröffentlichungsnummer: WO 2009/103392

(56) Entgegenhaltungen:
- EP-A1- 1 596 169
- JP-A- 2000 157 543
- US-A- 4 864 856

## Beschreibung

Die Erfindung betrifft ein Verfahren zur Zustandsüberprüfung einer Pipette, die ein Saugrohr und eine Pipettenspitze umfasst, Pipettierverfahren unter Einsatz eines solchen Verfahrens, eine Pipettiervorrichtung und eine Saugrohranordnung für eine Pipettiervorrichtung, mit denen diese Verfahren durchgeführt werden können.

Zum Beispiel in der Analytik ist es oftmals notwendig, sehr kleine Flüssigkeitsmengen mit hoher Präzision zu dosieren, wobei in der Regel Pipetten eingesetzt werden. Gerade bei automatisierten Pipettierverfahren ist es dabei wichtig, den Zustand der Pipette genau zu kennen, also insbesondere die korrekte Funktionsfähigkeit oder das Füllvolumen. Außerdem kann es nützlich sein, den Zeitpunkt zu wissen, wann die Pipette bei Annäherung an eine Flüssigkeit die Flüssigkeitsoberfläche berührt.

Gemäß einem Verfahren, das in US 5,428,997 beschrieben ist, taucht das stiftförmige Ende eines Ultraschallgebers in die Flüssigkeit. Die Ultraschallresonanzfrequenz wird beobachtet, um ein Maß für den Eintauchzeitpunkt zu erhalten. In US 2003/0200801 A1 ist ein Verfahren beschrieben, bei dem an der Spitze einer Pipette zwei konzentrische Elektroden vorgesehen sind, die bei Berührung mit der Flüssigkeit kurzgeschlossen werden und so ein Signal über das Erreichen der Flüssigkeitsoberfläche abgeben können. Andere Verfahren verwenden leitfähige Pipettenspitzen, deren Kapazität sich beim Eintauchen in die Flüssigkeit verändert.

Um das Kontaminationsrisiko für die Flüssigkeit durch das Eintauchen zu vermindern, werden zum Beispiel auswechselbare Pipettenspitzen eingesetzt. Durch die besondere Ausgestaltung entsprechender Einwegspitzen zum Beispiel als leitfähige Spitzen oder mit gesonderten Elektroden entstehen gegebenenfalls hohe Kosten.

Ein in US 5,705,750 beschriebenes Verfahren misst den Abstand zu einer Flüssigkeitsoberfläche durch Auswertung der Laufzeit eines in Richtung der Flüssigkeitsoberfläche ausgesendeten Ultraschallpulses, wozu eine entsprechende Messanordnung notwendig ist.

US 5,465,629 beschreibt einen Eintauchsensor, bei dem die Luftsäule im Inneren der Pipette zum Schwingen angeregt wird. Je nachdem, ob das Ansaugloch der Pipette offen oder geschlossen ist, wenn sich die Pipette zum Beispiel in der Flüssigkeit befindet, ändert sich die Schwingungscharakteristik der Luftsäule in dem Saugrohr der Pipette. Zum Anregen der Schwingung in der Luftsäule wird eine Schallquelle benötigt. Wird der Eintauchzeitpunkt andererseits durch einen detektierbaren Druckanstieg im Inneren der Pipette bestimmt, muss sehr genau ein definierter Luftstrom durch das Ansaugloch der Pipette eingestellt werden.

EP 1 596 169 A1 beschreibt eine Detektionsvorrichtung für die Detektion des Kontakts einer Pipettennadel mit einer Flüssigkeitsoberfläche mittels akustischer Signale welche mittels Piezoaktuatoren eines Pipettenhalters als Schwingungsanregung in die Pipettennadel eingekoppelt werden. Bei einer festen Frequenz der Schwingungsanregung wird die Amplitude und die Phase der in der Pipettennadel angeregten Längsvibration erfasst. Beim Absenken der Pipettennadel über einer Flüssigkeit ändert sich insbesondere die Phasenlage der angeregten Längsvibration, sobald die Spitze der Pipettennadel auf die Flüssigkeitsoberfläche trifft. Aus der erfassen Änderung der Phasenlage wird auf den Zeitpunkt des Auftreffens der Pipettenspitze auf die Flüssigkeitsoberfläche geschlossen.

JP 2000 157543 A offenbart ein piezoelektrisches Element bei dem die beiden Endteile des piezoelektrischen Elements mit Lötmittel beschichtet sind und jeweils eine Masse darstellen. Daher ist der Mittelteil des piezoelektrischen Elements dominant im Schwingungsbereich und die Schwingung an beiden Enden des piezoelektrischen Elements werden durch die beiden äußeren Massen unterdrückt.

US 4 864 856 A offenbart eine Flüssigkeitspegelerfassungseinrichtung bestehend aus einem Vibrator, zum Vibrieren eines Probengefäßes, und ein piezoelektrisches Element welches an einem Saugelement vorgesehen ist welches eine Saugöffnung zum Ansaugen der Probenflüssigkeit aufweist. Änderungen an der Ausgangsspannung des piezoelektrischen Elements werden ausgelesen, wenn das Saugelement vertikal bewegt wird. Ein Kontakt des unteren Ende des Saugelements mit der Probenflüssigkeit wird durch eine Änderung der Ausgangsspannung detektiert, und der Flüssigkeitspegel der Probenflüssigkeit wird erfasst.

Es ist Aufgabe der Erfindung eine Verbesserung der Überwachung und der Zuverlässigkeit des automatischen Pipettiervorgangs zu erzielen. Diese Aufgabe wird durch ein Verfahren und eine Vorrichtung mit den im Anspruch 1 bzw. Anspruch 13 angegebenen Merkmalen gelöst. Bevorzugte Ausführungsformen ergeben sich aus den Unteransprüchen.

Das erfindungsgemäße Verfahren dient zur Zustandsüberprüfung einer Pipette, die ein Saugrohr und eine Pipettenspitze umfasst. Ultraschall wird in die Wandung des Saugrohrs eingekoppelt und die Dämpfung des Ultraschallsignales wird frequenzabhängig gemessen. Die gemessene frequenzabhängige Dämpfung wird mit wenigstens einer Referenzmessung der frequenzabhängigen Dämpfung oder einer auf Referenzmessungen basierenden Eichkurve verglichen. Durch den Vergleich wird bestimmt, ob die Pipette Flüssigkeit enthält oder berührt.

Eine Abweichung von einem erwarteten Verlauf kann zum Beispiel zur Erzeugung eines Warnsignals eingesetzt werden.

Mit dem erfindungsgemäßen Verfahren wird also die Dämpfung des Ultraschallsignals zur Detektion verwendet, die beim Einkoppeln des Ultraschalls in die Wandung der Pipette hervorgerufen wird. Die durch den Ultraschall in dem System, das die Wandung, die Pipettenspitze und den Ultraschallgeber umfasst, angeregten Schwingungen reagieren sehr empfindlich auf Änderungen des Pipettenzustandes. Ist die Pipette zum Beispiel beschädigt oder fehlt ein Teil, zum Beispiel die Pipettenspitze, so spiegelt sich dies in der Dämpfung des Ultraschallsignals wider. Die in dem System angeregten Schwingungen reagieren außerdem sehr empfindlich auf eine zusätzliche Massenbelegung, die zum Beispiel beim Eintauchen der Pipette in eine Flüssigkeit oder beim Aufsaugen von Flüssigkeit auftritt.

Zur Messung der frequenzabhängigen Dämpfung kann zum Beispiel ein Ultraschallsignal in einem Frequenzbereich mit einer gewissen Bandbreite ausgesendet werden und das gemessene Signal mit Hilfe eines Frequenz analysierenden Messgeräts, zum Beispiel eines Netzwerkanalysators, ausgewertet werden. Bei einer anderen Verfahrensführung wird die eingekoppelte Frequenz mit der Zeit geändert.

Verglichen werden können zum Beispiel bestimmte ausgewählte Charakteristika, einzelne Werte oder der Verlauf des gemessenen frequenzabhängigen Dämpfungssignals und der Referenzmessung. Eine Referenzmessung kann auch die Festlegung eines oder mehrerer Schwellwerte umfassen, deren Über- oder Unterschreitung durch entsprechende Messwerte zur Detektion ausgewertet werden kann.

Gegebenenfalls kann auch eine aus Referenzmessungen bei verschiedenen Bedingungen kombinierte Eichkurve für den Vergleich herangezogen werden.

Die wenigstens eine Referenzmessung zum Vergleich der gemessenen frequenzabhängigen Dämpfung kann mit einer baugleichen Pipette vorgenommen worden sein. Besonders vorteilhaft ist es jedoch, wenn die Pipette mit dem Saugrohr und der Pipettenspitze verwendet wird, die auch bei der tatsächlichen Messung eingesetzt wird, um mögliche Fehler durch unterschiedliche Ausgestaltungen der Pipetten zu vermeiden.

Die frequenzabhängige Dämpfung kann zum Beispiel zu definierten Zeitpunkten gemessen werden. Vorteilhaft ist die kontinuierliche Messung des Dämpfungssignals, um eine lückenlose Überwachung zu ermöglichen. Vorteilhafterweise wird ein Frequenzbereich für die Messung ausgewählt, in dem sich zumindest eine Eigenmode des verwendeten Systems befindet. Es ist dann zum Beispiel auf einfache Weise möglich, den Wert der Resonanzfrequenz des gemessenen Dämpfungssignals mit dem Wert der Resonanzfrequenz einer Referenzmessung oder mit einer Eichkurve, die auf den Resonanzfrequenzen bei unterschiedlichen Bedingungen beruht, zu vergleichen. Bei einer anderen Ausgestaltung wird die Resonanzamplitude der Eigenmode verglichen. Auch andere Charakteristika einer Eigenmode können zum Vergleich eingesetzt werden, wie zum Beispiel die Halbwertsbreite oder die Fläche der Eigenmode.

Besonders günstig ist es dabei, wenn die Anordnung zur Durchführung des Verfahrens derart gewählt wird, dass der Ultraschall derart in die Wandung des Saugrohrs eingekoppelt wird, dass mehrheitlich Transversalmoden angeregt werden. Dazu ist es vorteilhaft, wenn zum Beispiel der Piezoaktuator derart an dem Saugrohr befestigt wird, dass bevorzugt Scherbewegungen auf das Saugrohr ausgeübt werden. Transversalmoden weisen zum Beispiel eine sehr hohe Empfindlichkeit gegenüber einer beim Eintauchen der Pipettenspitze in die Flüssigkeit auftretenden Massenbelegung auf. Erfindungsgemäß wird ein Piezoaktuator verwendet, um den Ultraschall in die Wandung des Saugrohrs einzukoppeln. Ein Piezoaktuator ist kostengünstig und kann einfach zum Beispiel an der Außenwandung des Saugrohrs befestigt werden. Er kann zum Beispiel eine Blei-Zirkonat-Titanat-Keramik umfassen.

Zur Erhöhung der Sensitivität des Aktuators zum Beispiel auf den Zeitpunkt des Eintauchens, die Eintauchtiefe oder die Füllhöhe der Pipette wirkt eine Zusatzmasse mit dem Piezoaktuator zusammen. Durch eine solche Zusatzmasse werden zum Beispiel die Beträge der Frequenz- oder Dämpfungsänderung beim Eintauchen der Pipette bzw. beim Einsaugen von Flüssigkeit in die Pipette oder beim Ausstoßen von Flüssigkeit aus der Pipette vergrößert. Eine einfache Ausgestaltung des Verfahrens sieht dazu vor, dass eine Zusatzmasse zum Einsatz kommt, die an der dem Saugrohr abgewandten Seite des Piezoaktuators befestigt, einfacherweise aufgeklebt, ist. Besonders günstig ist eine Zusatzmasse, die dem 0,1- bis 10-fachen, bevorzugt 0,5- bis 2-fachen, Gewicht des Saugrohrs entspricht.

Vorteilhafterweise kann der Piezoaktuator nicht nur als Ultraschallsender sondern auch als Empfänger für das gedämpfte Ultraschallsignal eingesetzt werden.

Der für das Ultraschallsignal verwendete Frequenzbereich bestimmt sich durch die speziellen Eigenschaften der verwendeten Pipettengeometrie, also insbesondere der Maße und den Materialien des Saugrohrs, der verwendeten Pipettenspitze und der gegebenenfalls vorhandenen Zusatzmasse, wobei vorteilhafterweise ein Frequenzbereich gewählt wird, in dem eine Eigenmode angeregt werden kann. Eine hohe Empfindlichkeit ist zum Beispiel erreichbar, wenn Ultraschallfrequenzen aus einem Bereich gewählt werden, der dem 1- bis 10-fachen des Quotienten aus der Schallgeschwindigkeit im Pipettenmaterial und einer charakteristischen geometrischen Ausdehnung der Pipette, insbesondere deren Länge, entspricht.

Um das Kontaminationsrisiko zu vermindern, ist es vorteilhaft, Einwegpipettenspitzen einzusetzen. Dazu können zweiteilige Pipetten eingesetzt werden, wobei ein erster Teil das Saugrohr und ein zweiter Teil die Pipettenspitze umfasst, die vorteilhafterweise lösbar ausgestaltet ist.

Mit dem erfindungsgemäßen Verfahren zur Zustandsüberprüfung kann insbesondere bei zweiteiligen Pipetten festgestellt werden, ob die Pipette vollständig ist. Gerade bei automatisierten Verfahren mit Einwegpipettenspitzen ist das Verfahren vorteilhaft einsetzbar, da das Vorhandensein der Pipettenspitze ohne Sichtprüfung durch eine Bedienperson durchgeführt werden kann. Das Fehlen der Pipettenspitze spiegelt sich in der frequenzabhängigen Ultraschalldämpfung des Saugrohrs wider und ist so gut nachweisbar. Besonders vorteilhaft ist dies beim Einsatz von automatisierten Pipettierverfahren, bei denen sehr viele Pipetten von einem Roboter parallel bedient werden.

Das erfindungsgemäße Verfahren zur Zustandsüberprüfung einer Pipette kann vorteilhaft bei Pipettierverfahren eingesetzt werden. Mit dem erfindungsgemäßen Verfahren kann dabei zum Beispiel der Zustand einer Pipette dahingehend geprüft werden, ob die Pipettenspitze eine zu pipettierende Flüssigkeit berührt. Dazu kann die gemessene frequenzabhängige Dämpfung mit einer Referenzmessung der frequenzabhängigen Dämpfung verglichen werden, die an einer Pipette durchgeführt wurde, die keine Flüssigkeit berührt. Zum Beispiel eine Verschiebung oder eine Abflachung des Resonanzfrequenzsignals kann sehr genau detektiert werden, so dass der Eintauchzeitpunkt exakt bestimmt werden kann.

Nach dem so detektierbaren Eintauchen der Pipettenspitze in die Flüssigkeit wird Flüssigkeit in die Pipette gesaugt. Die Flüssigkeit kann dann mit der Pipette zu einem anderen Ort transportiert werden und wieder aus der Pipette ausgestoßen werden.

Besonders einfach ist es bei einer solchen Verfahrensführung, wenn die Pipette mit dem Saugrohr und der Pipettenspitze von einem Punkt oberhalb der Oberfläche der zu pipettierenden Flüssigkeit in Richtung der Flüssigkeit abgesenkt wird. Während des Absenkvorgangs kann die frequenzabhängige Dämpfung gemessen werden, um so ein Referenzsignal vor dem Eintauchen zu erhalten. Weiteres Absenken führt dazu, dass die Pipettenspitze die Oberfläche der Flüssigkeit berührt, wodurch sich das frequenzabhängige Dämpfungssignal ändert. Bei dieser vorteilhaften Ausgestaltung wird also während des Absenkens der Pipette in Richtung der Flüssigkeit die frequenzabhängige Dämpfung gemessen, um aus einer Änderung des frequenzabhängigen Dämpfungssignals den Auftreffzeitpunkt der Pipettenspitze auf der Flüssigkeitsoberfläche zu bestimmen.

Um den Pipettiervorgang charakterisieren zu können, wird bei einer Ausgestaltung der Erfindung aus dem frequenzabhängigen Dämpfungssignal auf den Zustand der Pipette hinsichtlich der Eintauchtiefe in einer Flüssigkeit geschlossen. Je weiter die Pipettenspitze in die Flüssigkeit eintaucht, desto stärker verändert sich das frequenzabhängige Dämpfungssignal gegenüber einer Referenzmessung, bei der sich die Pipette außerhalb der Flüssigkeit befindet.

Bei einem anderen erfindungsgemäßen Pipettierverfahren wird das frequenzabhängige Dämpfungssignal während des Aufsaugens von Flüssigkeit in die Pipette überwacht, um so eine Information über die bereits aufgesaugte Flüssigkeitsmenge zu erhalten, die ebenfalls Einfluss auf die frequenzabhängige Dämpfung hat. Die aufgesaugte Flüssigkeit kann dann mit der Pipette an einen anderen Ort transportiert und wieder abgegeben werden.

Schließlich lässt sich bei einem anderen erfindungsgemäßen Pipettierverfahren aus einem frequenzabhängigen Dämpfungssignal, das während des Ausstoßens der Flüssigkeit aus der Pipette überwacht wird, sehr präzise bestimmen, wann die Pipette am Ende eines Pipettiervorganges den Zustand vollständiger Entleerung erreicht hat. Für diese Verfahrensführung wird das frequenzabhängige Referenzsignal während des Ausstoßprozesses überwacht.

Ein weiteres erfindungsgemäßes Pipettierverfahren setzt das erfindungsgemäße Verfahren zur Zustandsüberprüfung der Pipette ein, um die Art der Flüssigkeit zu bestimmen, die sich beim Pipettiervorgang in der Pipette befindet. Unterschiedliche Flüssigkeiten zum Beispiel mit unterschiedlicher Dichte bewirken ein unterschiedliches Ultraschalldämpfungsverhalten des Saugrohrs, in dem sie sich befinden. Insofern kann das Dämpfungssignal des Saugrohrs durch Vergleich mit entsprechenden Referenzmessungen auch zur Bestimmung der Art der Flüssigkeit verwendet werden. Auch andere physikalische oder chemische Eigenschaften der Flüssigkeit, die Einfluss auf die Dämpfung des die Flüssigkeit enthaltenden Saugrohres haben können, können zur Charakterisierung herangezogen werden.

Insbesondere wenn die erfindungsgemäßen Verfahren zur Bestimmung des Eintauchzeitpunktes, zur Überwachung des Füllstandes oder des Ausstoßprozesses eingesetzt werden, können mehrere Referenzmessungen vorteilhaft zur Bildung einer Eichkurve kombiniert werden.

Die Erfindung umfasst insbesondere auch die Kombination zweier oder mehrerer der beanspruchten erfindungsgemäßen Pipettierverfahren bzw. Zustandsüberprüfungsverfahren bei einem Pipettiervorgang.

Eine erfindungsgemäße Saugrohranordnung für eine Pipettiervorrichtung zum Pipettieren von Flüssigkeit weist einen Ultraschallgeber auf, der an einem Saugrohr befestigt ist und zum Einkoppeln von Ultraschall in die Wandung des Saugrohrs dient. Eine Ansteuereinrichtung dient zum Ansteuern des Ultraschallgebers zur Abgabe eines Ultraschallsignals in einem vorbestimmten Frequenzbereich und eine Empfangseinrichtung ist zum Empfang des gedämpften Ultraschallsignals vorgesehen.

Schließlich weist die erfindungsgemäße Saugrohranordnung eine Saugeinrichtung auf, mit deren Hilfe Unterdruck in dem Saugrohr erzeugt werden kann, um Flüssigkeit in oder durch das Saugrohr zu saugen. Dabei kann es sich zum Beispiel um einen Pipettensaugkolben handeln, der in dem Saugrohr geführt ist.

Eine solche erfindungsgemäße Saugrohranordnung kann insbesondere für die erfindungsgemäßen Pipettierverfahren und das erfindungsgemäße Zustandsüberprüfungsverfahren eingesetzt werden. Insbesondere ist es damit möglich, Einwegpipettierspitzen zu verwenden, die auf das Saugrohr aufgesetzt werden, um zusammen mit dem Saugrohr eine Pipette zu bilden. Einkoppeln des Ultraschallsignals in die Wandung des Saugrohrs und Messung des gedämpften Ultraschallsignals kann in beschriebener Weise zur Durchführung der erfindungsgemäßen Verfahren eingesetzt werden.

Vorteilhafte Ausgestaltungen der erfindungsgemäßen Saugrohranordnung ergeben sich in analoger Weise aus den beschriebenen Ausgestaltungen der erfindungsgemäßen Verfahren und deren Vorteilen.

Insbesondere können zur Durchführung einer frequenzabhängigen Messung bei der erfindungsgemäßen Saugrohranordnung die Ansteuereinrichtung und die Empfangseinrichtung zum Ansteuern bzw. zum Empfang eines breitbandigen oder eines zeitlich veränderbaren Ultraschallsignales ausgestaltet sein.

Bei einer vorteilhaften Ausgestaltung der erfindungsgemäßen Saugrohranordnung ist eine Auswerteeinrichtung vorgesehen, die zur frequenzabhängigen Auswertung des gedämpften Ultraschallsignals, vorzugsweise im Hinblick auf dessen Resonanzfrequenz und/oder dessen Resonanzamplitude, ausgestaltet ist. Mit einer solchen Auswerteeinrichtung kann der Pipettiervorgang und die Überwachung des Pipettiervorgangs auf leichte Weise automatisiert werden.

Die Auswerteeinrichtung kann auch einen Speicher umfassen, in dem die Daten von Referenzmessungen oder daraus zusammengestellten Eichkurven zum Vergleichen abgelegt sind.

Wird bei einer erfindungsgemäßen Saugrohranordnung der Ultraschallgeber an der Außenseite der Wandung des Saugrohrs vorgesehen, wird eine Kontamination des Ultraschallgebers durch die Flüssigkeit vermieden. Die Verwendung einer Zusatzmasse, die mit dem Ultraschallgeber zusammenwirkt, insbesondere mit diesem verklebt ist, dient der Erhöhung der Sensitivität des Ultraschallgebers. Eine vorteilhafte Größenordnung für die Zusatzmasse liegt im Bereich von 0,1- bis 10-mal, bevorzugt 0,5- bis 2-mal, dem Gewicht des Saugrohrs.

Besonders kostengünstig und einfach ist die Verwendung eines Piezoaktuators als Ultraschallgeber.

Die erfindungsgemäße Saugrohranordnung kann integraler Bestandteil einer gesamten Pipette sein. Besonders vorteilhaft ist der Einsatz einer erfindungsgemäßen Saugrohranordnung jedoch in einer Pipettiervorrichtung mit einer wenigstens zweiteiligen Pipette, wobei ein erster Teil die erfindungsgemäße Saugrohranordnung und ein zweiter Teil eine Pipettenspitze umfasst. Um das leichte Austauschen der Pipettenspitze, die zum Beispiel als Einwegteil ausgestaltet sein kann, zu ermöglichen, ist es dabei von besonderem Vorteil, wenn die zwei Teile der Pipettiervorrichtung lösbar voneinander ausgestaltet sind, um den Pipettenspitzenwechselprozess einfach zu gestalten.

Die Erfindung wird im Folgenden anhand beispielhafter Ausführungsformen und Ausgestaltungen erläutert, wobei auf die schematischen Figuren Bezug genommen wird. Dabei zeigen
- Fig. 1: den unteren Bereich einer erimdungsgemäß ausgestalteten Pipettiervorrichtung,
- Fig. 2: das frequenzabhängige Dämpfungssignal bei unterschiedlichen Eintauchtiefen,
- Fig. 3: ein Diagramm der Resonanzfrequenz in Abhängigkeit der Eintauchtiefe der Pipette,
- Fig. 4: die frequenzabhängige Dämpfung bei unterschiedlichen Füllvolumina der Pipette, und
- Fig. 5: ein Diagramm der Resonanzfrequenz in Abhängigkeit des Füllvolumens.

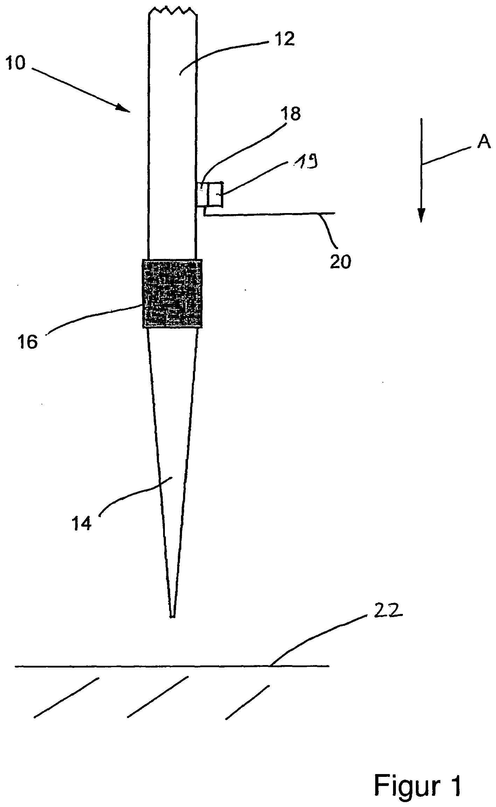

Fig. 1 zeigt das untere Ende einer Pipette 10 mit einer Pipettenspitze 14. Die Pipettenspitze weist einen Kragen 16 auf, mit dem sie auf ein Saugrohr 12 aufgesteckt ist. Die Pipettenspitze 14 ist zum Beispiel aus Polypropylen.

Das Saugrohr 12, das nur teilweise dargestellt ist, kann in ein voll automatisiertes Robotersystem zum Pipettieren eingesetzt werden. In dem Saugrohr 12 befindet sich in an sich bekannter Weise ein Saugkolben, der über eine motorisierte Spindel angetrieben werden kann, um Flüssigkeit in die Pipette einzusaugen bzw. auszustoßen.

Bei einer anderen Ausführungsform befindet sich der Kolben in einer externen Vorrichtung, die mit dem Saugrohr über einen Schlauch verbunden ist. Alternativ kann an das Saugrohr auch eine Saugeinrichtung, zum Beispiel eine entsprechende Pumpe, angeschlossen sein.

Bezugsziffer 18 bezeichnet einen piezoelektrischen Aktuator, der als Ultraschallsender und Ultraschallempfänger verwendet wird. Vorteilhafterweise wird ein Element aus piezoelektrischem Material, beispielsweise eine Blei-Zirkonat-Titanat-Keramik, eingesetzt. Der piezoelektrische Aktuator 18 ist über eine Zuleitung 20, die zum Beispiel zwei dünne Kabel aufweist, mit einer nicht gezeigten Ansteuer- und Auswerteeinheit verbunden, die zum Beispiel einen entsprechend programmierten Mikroprozessor umfasst.

Der Piezoaktuator 18 ist zum Beispiel mit Epoxydkleber an dem Saugrohr 12 befestigt. Er ist derart ausgerichtet, dass er bevorzugt eine Scherbewegung auf das Saugrohr 12 ausüben kann, so dass mehrheitlich Transversalmoden angeregt werden.

An der dem Saugrohr 12 abgewandten Seite des Piezoaktuators 18 kann eine Zusatzmasse 19 angeordnet sein, um die Sensitivität des Piezoaktuators zu erhöhen. Die Zusatzmasse kann zum Beispiel dem 0,1- bis 10-fachen Gewicht des Saugrohrs entsprechen.

Der piezoelektrische Aktuator ist derart ausgewählt, dass er Schwingungen insbesondere im Frequenzbereich der Eigenmoden des Systems aus dem verwendeten Saugrohr 12 mit aufgesteckter Pipettenspitze 14, dem Aktuator 18 und gegebenenfalls der Zusatzmasse 19 anregen kann. Typischerweise liegen solche Eigenmoden im Bereich von 10 bis 80 kHz, die mit piezoelektrischen Blei-Zirkonat-Titanat-Elementen gut anregbar sind.

Das Messsystem, das die Ansteuer- und Auswerteeinheit umfasst, ist derart ausgestaltet, dass es in einem Hochfrequenzintervall definierte Leistung an den Piezoaktuator 18 senden kann und das gedämpfte Ultraschallsignal, das an dem Piezoaktuator 18 wieder ankommt, zu messen, wobei die Sensitivität zum Beispiel im Bereich von 10 µV liegt. Um frequenzabhängig die Dämpfung messen zu können, umfasst die Auswerteeinrichtung zum Beispiel einen Netzwerkanalysator. Die Auswerteeinrichtung ist derart ausgestaltet, eine Messung oder charakteristische gemessene Werte mit in einem Speicher abgelegten Referenzmessungen oder daraus gebildeten Eichkurven zu vergleichen.

In Fig. 1 ist die Pipette 10 in einem Zustand gezeigt, in dem sie sich kurz über der Flüssigkeitsoberfläche 22 einer Flüssigkeit befindet, die pipettiert werden soll. Dazu kann die Pipette zum Beispiel mit Hilfe eines Pipettierroboters in Richtung A auf die Flüssigkeitsoberfläche 22 abgesenkt werden.

Das Saugrohr 12 ist zum Beispiel in dem Pipettierroboter möglichst schwingungsdämpfend aufgehängt, so dass in dem mechanischen Aufbau des Roboters entstehende Schwingungen nicht auf die Pipette übertragen werden und die Messung der gedämpften Ultraschallschwingungen mit dem Piezoaktuator 18 verfälschen würde. Das Saugrohr 12 ist in dem Pipettierroboter bei diesem Beispiel nicht starr befestigt, damit die Eigenmoden, die mit dem Piezoaktuator 18 angeregt werden und deren Dämpfung zur Messung verwendet wird, nicht durch die starre Befestigung behindert werden. Eine starre Befestigung ist jedoch nicht ausgeschlossen, wenn gegebenenfalls entstehende Schwingungen des Roboters ausreichend gering sind oder bei der Auswertung der Messung berücksichtigt werden.

Eine Pipette, wie sie in Fig. 1 dargestellt ist, wird wie folgt eingesetzt.

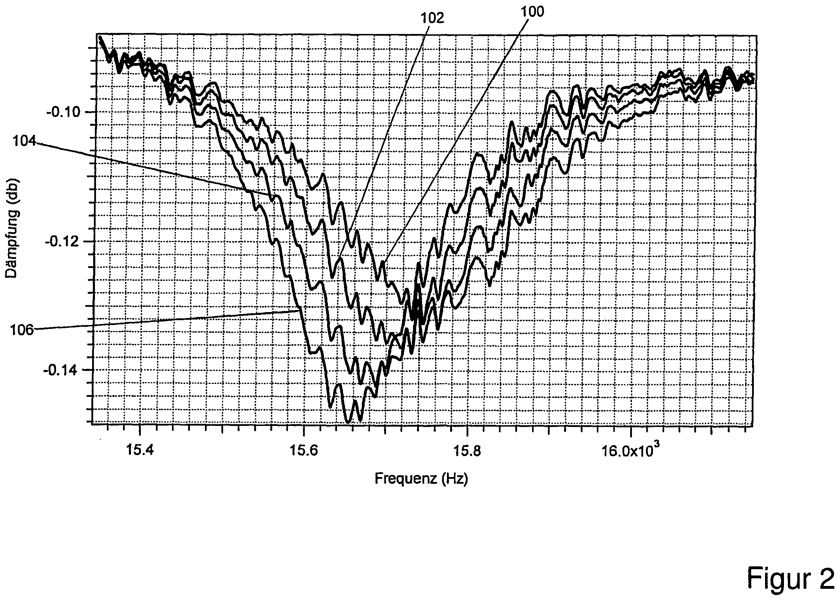

Von der Ansteuer- und Auswerteeinheit wird durch die Zuleitungen 20 ein Hochfrequenzsignal in den Piezoaktuator 18 eingespeist, das zum Beispiel im Frequenzbereich von 10 bis 80 kHz liegt. Dadurch werden in dem Saugrohr 12 Eigenschwingungen angeregt. In Fig. 2 zeigt die Kurve 100 zum Beispiel die Dämpfung in Dezibel, die bei einer Pipette gemessen wird, die sich oberhalb des Flüssigkeitsspiegels 22 befindet und insofern zu 0 mm in die Flüssigkeit eingetaucht ist. Gezeigt ist die Dämpfung der eingekoppelten Ultraschallschwingung durch die Anregung der Eigenmode in dem System aus Saugrohr 12 mit Pipettenspitze 14, Aktuator 18 und einer gegebenenfalls vorhandenen Zusatzmasse 19. Gezeigt sind Messungen mit einer 1ml-Pipette.

Die angeregten Schwingungen in dem Saugrohr 12 lösen eine Deformation des piezoelektrischen Aktuators aus, wodurch in diesem elektrische Spannungen induziert werden. Mit einer geeigneten Messvorrichtung wird die elektrische Antwort des Systems mit dem hochfrequenten Anregungssignal verglichen, wobei der Unterschied bei Anregung einer Eigenmode am größten ist. Die Eigenmode wird hauptsächlich durch die Eigenschaften des Saugrohrs 12, der Pipettenspitze 14 und der gegebenenfalls vorhandenen Zusatzmasse 19 bzw. durch die Massenbelegung der Elemente durch zu pipettierende Flüssigkeit bestimmt.

Die Pipette 10 wird jetzt zum Beispiel mit dem Pipettierroboter in Richtung A zur Flüssigkeitsoberfläche 22 hin bewegt. In dem Moment, in dem die Spitze die Flüssigkeit berührt, verändert sich die Dämpfung. Die Resonanzfrequenz verschiebt sich und die Resonanzamplitude wird kleiner. In Fig. 2 ist dies am Beispiel unterschiedlicher Eintauchtiefen gezeigt. 102 zeigt das Signal bei einer 1 mm weit in die Flüssigkeit eingetauchten Pipette, 104 zeigt das Signal bei einer 2 mm in die Flüssigkeit eingetauchten Pipette und 106 zeigt das Signal bei einer 3 mm in die Flüssigkeit eingetauchten Pipette.

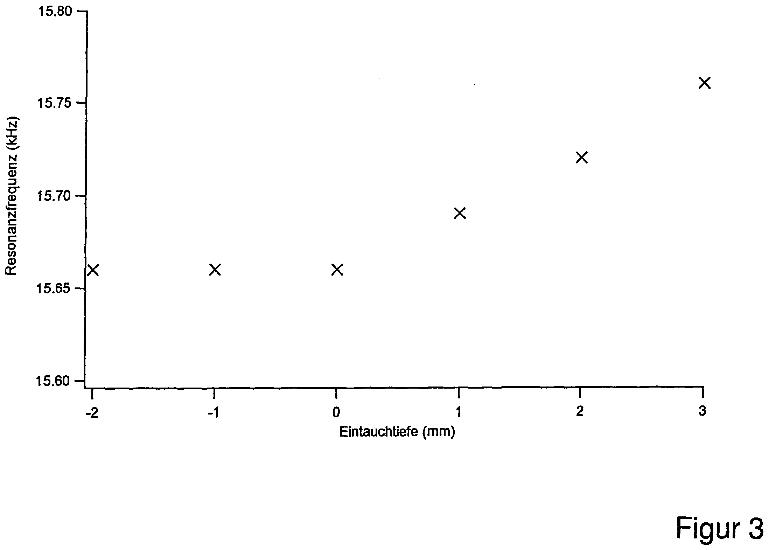

Es ergibt sich ein Zusammenhang zwischen der Dämpfung und der Resonanzfrequenz, wie er in Fig. 3 diagrammatisch aufgezeichnet ist. Die negativen Werte für die Eintauchtiefe stehen für Messungen, bei denen sich die Pipette in einem entsprechenden Abstand oberhalb der Flüssigkeitsoberfläche befindet, und sind insofern untereinander gleich. Ein Diagramm wie das der Fig. 3 kann zum Beispiel als Eichkurve eingesetzt werden, gegebenenfalls nachdem die eingetragenen Referenzpunkte durch eine Kurve gefittet wurden.

Wenn sich die Resonanzfrequenz des Dämpfungssignals zu größeren Frequenzen hin verschiebt, zeigt dies an, dass die Pipette in die Flüssigkeit eintaucht. Die Eintauchtiefe selbst kann zum Beispiel anhand eines Diagramms, wie es in Fig. 3 dargestellt ist, festgestellt werden.

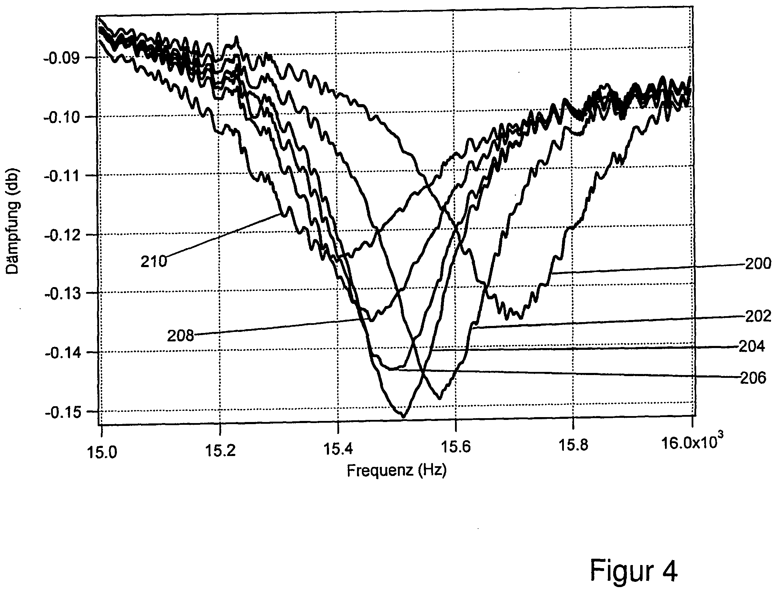

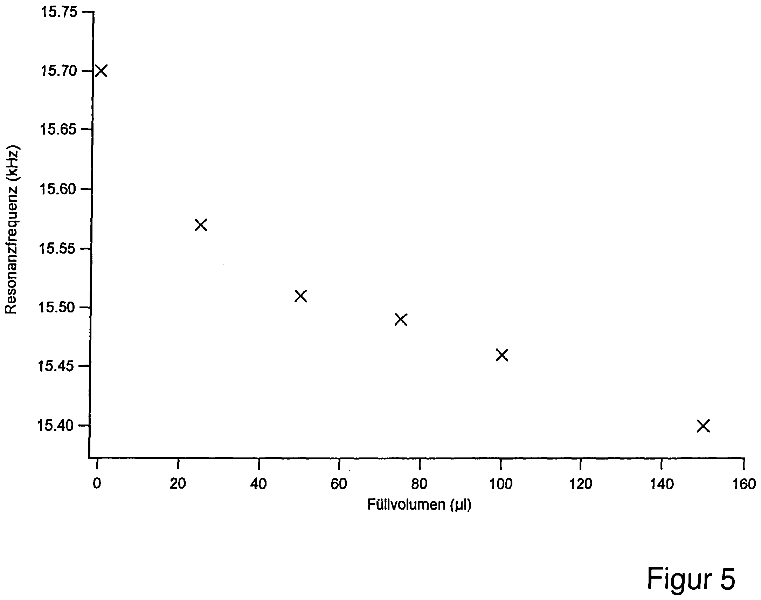

Sobald die Pipette 10 mit der Spitze 14 die Flüssigkeit 22 berührt oder in diese eingetaucht ist, kann durch den Pipettierroboter in an sich bekannter Weise mit Hilfe des Saugkolbens der Pipette Flüssigkeit in die Pipette aufgenommen werden. Währenddessen kann wiederum die frequenzabhängige Dämpfung eines Ultraschallsignals gemessen werden, das durch den Piezoaktuator 18 in die Wandung des Saugrohrs 12 eingekoppelt wird. Entsprechende Messkurven sind beispielhaft für eine 1ml-Pipette in Fig. 4 gezeigt. Bezugsziffer 200 bezeichnet eine Messkurve des frequenzabhängigen Dämpfungssignals bei leerer Pipette. 202 bezeichnet die Messung an einer Pipette, die mit 25 µl Flüssigkeit gefüllt ist. 204 bezeichnet eine Messkurve für eine Pipette, die mit 50 µl Flüssigkeit gefüllt ist, während 206 eine Messkurve für eine Pipette zeigt, die mit 75 µl Flüssigkeit gefüllt ist. Schließlich bezeichnet 208 die Messung der Dämpfung an einer Pipette, die mit 100 µl Flüssigkeit gefüllt ist, während 210 eine Messkurve bezeichnet, die an einer Pipette vorgenommen wurde, die mit 150 µl Flüssigkeit gefüllt ist. Es ergibt sich ein Zusammenhang für das frequenzabhängige Dämpfungssignal in Abhängigkeit des Füllvolumens, der in Fig. 5 gezeigt ist.

Aus diesem Diagramm kann bei der gemessenen Resonanzfrequenz abgelesen werden, welches Volumen sich exakt in der Pipette befindet. Ein Diagramm wie das der Fig. 5 kann dazu zum Beispiel als Eichkurve eingesetzt werden, gegebenenfalls nachdem die eingetragenen Referenzpunkte durch eine Kurve gefittet wurden.

Beim Ausstoßprozess der Pipette kann ebenfalls genau bestimmt werden, ob bzw. wann die Flüssigkeit vollständig aus der Pipette wieder ausgetreten ist. Dazu kann ebenfalls die frequenzabhängig Dämpfung überwacht werden und durch Vergleich mit einer Referenzmessung oder einer Eichkurve gemäß zum Beispiel der Fig. 5 festgestellt werden, wann das Signal dem Signal der leeren Pipette entspricht.

Abweichend von den hier gezeigten Diagrammen kann zum Beispiel auch die Resonanzamplitude ausgewertet werden, die ebenfalls von der Eintauchtiefe oder dem Füllvolumen abhängt, wie es in den Fig. 2 und 4 deutlich erkennbar ist. Andere Verfahren sehen die Auswertung der Fläche der Resonanzkurve oder der Halbwertsbreite vor.

Die Sensitivität des Piezoaktuators 18 auf den Zeitpunkt des Eintauchens, die Eintauchtiefe und das Füllvolumen in der Pipette kann durch eine Zusatzmasse zum Beispiel des 0,1- bis 10-fachen des Saugrohrgewichtes erhöht werden, die auf die der Pipette abgewandte Seite des Piezoaktuators 18 aufgeklebt ist. Durch eine solche Zusatzmasse werden die Beträge der Frequenz- oder Dämpfungsänderung beim Eintauchen der Pipette in die Flüssigkeit bzw. beim Einsaugen von Flüssigkeit in die Pipette oder beim Ausstoßen der Flüssigkeit aus der Pipette vergrößert.

Vor und während des Pipettiervorganges kann mit dem erfindungsgemäßen Verfahren zur Zustandsüberprüfung geprüft werden, ob die Pipette sich in einem ordnungsgemäßen Zustand befindet. Zum Beispiel äußert sich ein Fehler oder eine Undichtigkeit in der Pipettenspitze oder im Saugrohr in dem gemessenen frequenzabhängigen Dämpfungssignal. Auch wenn keine Pipettenspitze 14 auf das Saugrohr 12 aufgesteckt ist, wirkt sich dies in dem frequenzabhängigen Dämpfungssignal aus, das von einer entsprechenden Referenzmessung abweicht.

Nach einem Pipettiervorgang kann die einfache, kostengünstige, zum Beispiel aus Polypropylen gefertigte, Pipettierspitze ausgewechselt werden, um Kontaminationen der Flüssigkeit zukünftiger Messungen zu vermeiden.

Bei dem erfindungsgemäßen Verfahren und den erfindungsgemäßen Vorrichtungen wird Ultraschall in die Wandung des Saugrohrs 12 eingekoppelt. Die Einkopplung in das Saugrohr ist auf einfache Weise möglich und einfacher als zum Beispiel die Einkopplung in das Pipettenvolumen. Sie kann mit einem Piezoaktuator in einem einfach zugänglichen Frequenzbereich erreicht werden. Die Pipettenspitze braucht keine besondere Ausgestaltung oder besondere Materialien, so dass sie als Einwegelement ausgestaltet sein kann.

Besonders vorteilhaft ist die Anwendung bei automatisierten Pipettierverfahren. Hier werden von einem Pipettierroboter gegebenenfalls in sehr großer Anzahl mehrere Pipetten parallel gefüllt, und die aufgenommene Flüssigkeit abgegeben. Es ist dabei von besonderer Wichtigkeit, dass die einzelnen Pipetten genau überprüft und überwacht werden können, da eine optische Kontrolle durch eine Bedienperson in der Regel nicht durchgeführt wird. Die erfindungsgemäßen Verfahren und die erfindungsgemäßen Vorrichtungen eignen sich hierfür besonders, da sie eine präzise Funktionsprüfung und Zustandsprüfung erlauben. Außerdem ist auf einfache Weise der Füllstand in der Pipette und/oder die Art der in der Pipette enthaltenen Flüssigkeit feststellbar. Eine wichtige Anwendung ist zum Beispiel das Poolen von Blutproben.

### Bezugszeichenliste

- 10: Pipette
- 12: Saugrohr
- 14: Pipettenspitze
- 16: Kragen
- 18: Piezoaktuator
- 19: Zusatzmasse
- 20: Zuleitungen
- 22: Flüssigkeitsoberfläche
- 100, 102, 104, 106, 200, 202, 204, 206, 208, 210: frequenzabhängige Dämpfungssignale
- A: Absenkrichtung

## Patentansprüche

1. Verfahren zur Zustandsüberprüfung einer Pipette (10), die ein Saugrohr (12) und eine Pipettenspitze (14) umfasst, bei dem
- Ultraschall in die Wandung des Saugrohrs (12) eingekoppelt wird, wobei der Ultraschall mit einem Piezoaktuator (18) erzeugt wird und der Piezoaktuator an der Wandung des Saugrohrs (12) befestigt ist und wobei zur Erhöhung der Sensitivität eine Zusatzmasse (19) an der dem Saugrohr (12) abgewandten Seite des Piezoaktuators (18) befestigt ist,
- die Dämpfung des Ultraschallsignals frequenzabhängig in einem Frequenzbereich gemessen wird,
- durch Vergleich der gemessenen frequenzabhängigen Dämpfung in dem Frequenzbereich mit wenigstens einer Referenzmessung der frequenzabhängigen Dämpfung oder einer auf Referenzmessungen basierenden Eichkurve bestimmt wird, ob die Pipette (14) Flüssigkeit enthält oder berührt.

2. Verfahren nach Anspruch 1, bei dem die frequenzabhängige Dämpfung in dem Frequenzbereich ausgewertet wird, in dem zumindest eine Eigenmode des gemessenen Signals liegt, wobei für den Vergleich die Resonanzfrequenz und/oder Resonanzamplitude der wenigstens einen Eigenmode verglichen wird.

3. Verfahren nach einem der Ansprüche 1 oder 2, bei dem der Ultraschall derart in die Wandung des Saugrohrs (12) eingekoppelt wird, dass mehrheitlich Transversalmoden angeregt werden.

4. Verfahren nach einem der Ansprüche 1 bis 3, bei dem der Piezoaktuator (18) vorzugsweise eine BleiZirkonat-Titanat(PZT)-Keramik umfasst und wobei zur Erhöhung der Sensitivität die mit dem Piezoaktuator (18) zusammenwirkende Zusatzmasse (19) vorzugsweise eine Masse Bereich zwischen dem 0,1- bis 10-fachen des Saugrohrgewichtes aufweist.

5. Verfahren nach Anspruch 4, bei dem die Zusatzmasse (19) an der dem Saugrohr (12) abgewandten Seite des Piezoaktuators (18) aufgeklebt ist.

6. Verfahren nach einem der Ansprüche 4 oder 5, bei dem der Piezoaktuator (18) auch zum Empfang des gedämpften Ultraschallsignales eingesetzt wird.

7. Verfahren nach einem der Ansprüche 1 bis 6, bei dem die zur Messung der frequenzabhängigen Dämpfung eingesetzten Ultraschallfrequenzen aus einem Bereich des 1- bis 10-fachen des Quotienten der Schallgeschwindigkeit im Pipettematerial und einer charakteristischen geometrischen Ausdehnung, vorzugsweise der Länge, der Pipette gewählt werden.

8. Verfahren nach einem der Ansprüche 1 bis 7, bei dem eine zumindest zweiteilige Pipette (10) eingesetzt wird, wobei ein erster Teil das Saugrohr (12) und ein, vorzugsweise vom ersten Teil lösbarer, zweiter Teil die Pipettenspitze (14) umfasst, wobei als zweiter Teil ein Einwegelement (14) verwendet wird, und wobei aus dem frequenzabhängigen Dämpfungssignal in dem Frequenzbereich bestimmt wird, ob die Pipette (10) vollständig ist, insbesondere ob der lösbare zweite Teil der Pipette (14) vorhanden ist.

9. Pipettierverfahren zum Pipettieren von Flüssigkeit mit einer Pipette (10), die ein Saugrohr (12) und eine Pipettierspitze (14) umfasst, bei dem mit einem Verfahren nach einem der Ansprüche 1 bis 8 geprüft wird, ob die Pipettenspitze (14) eine zu pipettierende Flüssigkeit (22) berührt, und nach dem Eintauchen der Pipettenspitze (14) Flüssigkeit in die Pipette gesaugt wird, wobei die Pipette (10) von einem Punkt oberhalb der Oberfläche (22) der zu pipettierenden Flüssigkeit in Richtung (A) der Flüssigkeit abgesenkt wird und während des Absenkens die frequenzabhängige Dämpfung in dem Frequenzbereich gemessen wird, um aus einer Änderung des frequenzabhängigen Dämpfungssignals den Auftreffzeitpunkt der Pipettenspitze (14) auf der Flüssigkeitsoberfläche (22) zu bestimmen, und wobei aus dem frequenzabhängigen Dämpfungssignal, vorzugsweise durch Vergleich mit wenigstens einer Referenzmessung, besonders bevorzugt durch Vergleich mit zu einer Eichkurve kombinierten Referenzmessungen, auf die Eintauchtiefe der Pipette (10) in einer Flüssigkeit geschlossen wird.

10. Pipettierverfahren zum Pipettieren von Flüssigkeit mit einer Pipette (I0), die ein Saugrohr (12) und eine Pipettenspitze (14) umfasst, bei dem mit einem Verfahren nach einem der Ansprüche 1 bis 8 bestimmt wird, ob die Pipette (10) Flüssigkeit enthält und aus dem frequenzabhängigen Dämpfungssignal, vorzugsweise durch Vergleich mit wenigstens einer Referenzmessung, besonders bevorzugt durch Vergleich mit zu einer Eichkurve kombinierten Referenzmessungen, auf die Flüssigkeitsmenge in der Pipette (10) geschlossen wird.

11. Pipettierverfahren zum Pipettieren von Flüssigkeit mit einer Pipette (10), die ein Saugrohr (12) und eine Pipettenspitze (14) umfasst, bei dem mit einem Verfahren nach einem der Ansprüche 1 bis 8 bestimmt wird, ob die Pipette Flüssigkeit enthält und aus dem frequenzabhängigen Dämpfungssignal, vorzugsweise durch Vergleich mit wenigstens einer Referenzmessung, auf die Art der Flüssigkeit in der Pipette (10) geschlossen wird.

12. Pipettierverfahren zum Pipettieren von Flüssigkeit mit einer Pipette (10), die ein Saugrohr (12) und eine Pipettenspitze (14) umfasst, bei dem mit einem Verfahren nach einem der Ansprüche 1 bis 8 geprüft wird, ob nach dem Pipettiervorgang die Pipette (10) vollständig entleert ist.

13. Saugrohranordnung für eine Pipettiervorrichtung zum Pipettieren von Flüssigkeit zur Durchführung eines Verfahrens gemäß einem der Ansprüche 1 bis 12, mit
- einem an einem Saugrohr (12) befestigten Ultraschallgeber (18) zum Einkoppeln von Ultraschall in die Wandung des Saugrohrs (12), wobei der Ultraschallgeber (18) an der Wandung des Saugrohrs (12) befestigt ist und wobei zur Erhöhung der Sensitivität eine Zusatzmasse (19) an der dem Saugrohr abgewandten Seite des Ultraschallgebers (18) vorgesehen ist,
- einer Ansteuereinrichtung zum Ansteuern des Ultraschallgebers (18) zur Abgabe eines Ultraschallsignals in einem vorgegebenen Frequenzbereich,
- einer Empfangseinrichtung (18) zum Empfang eines gedampften Ultraschallsignals, und
- einer Saugeinrichtung, mit deren Hilfe Unterdruck in dem Saugrohr erzeugt werden kann, um Flüssigkeit in oder durch das Saugrohr zu saugen.

14. Pipettiervorrichtung mit einer wenigstens zweiteiligen Pipette (10), wobei ein erster Teil die Saugrohranordnung gemäß dem Anspruch 13 und ein zweiter Teil eine Pipettenspitze (14) umfasst, und wobei die wenigstens zwei Teile voneinander lösbar sind.

## Claims

1. Method for checking the state of a pipette (10), comprising a suction tube (12) and a pipette tip (14), in which
- ultrasound is coupled into the wall of the suction pipe (12), wherein the ultrasound is generated with a piezoactuator (18) and the piezoactuator is mounted on the wall of the suction pipe (12), and wherein, to increase sensitivity, an additional mass (19) is mounted on the wall of the piezoactuator (18) facing away from the suction tube (12),
- the attenuation of the ultrasonic signal is measured in a frequency-dependent manner within a frequency range,
- by comparing the measured frequency-dependent attenuation in the frequency range with at least one reference measurement of the frequency-dependent attenuation or a calibration curve based upon reference measurements, it is determined whether or not the pipette (14) contains or is in contact with liquid.

2. Method according to claim 1, in which the frequency-dependent attenuation is evaluated in the frequency range in which at least one eigenmode of the measured signal is located, wherein, for the comparison, the resonant frequency and/or resonant amplitude of the at least one eigenmode is compared.

3. Method according to one of claims 1 or 2, in which the ultrasound is coupled into the wall of the suction pipe (12) in such a way that predominantly transversal modes are excited.

4. Method according to one of claims 1 through 3, in which the piezoactuator (18) preferably comprises a lead zirconate titanate (PZT) ceramic and wherein, to increase sensitivity, an additional mass (19) acting in conjunction with the piezoactuator (18) preferably has a mass lying in the range between 0.1 and 10 times the weight of the suction tube.

5. Method according to claim 4, in which the additional mass (19) is glued to the side of the piezoactuator (18) facing away from the suction tube (12).

6. Method according to one of claims 4 or 5, in which the piezoactuator (18) is also used for the reception of the attenuated ultrasonic signal.

7. Method according to one of claims 1 through 6, in which the ultrasonic frequencies used for measuring the frequency-dependent attenuation are selected from a range of 1 to 10 times the quotient of the speed of sound in the material of the pipette and a characteristic geometric dimension of the pipette - preferably, the length.

8. Method according to one of claims 1 through 7, in which a pipette (10) of at least two parts is used, wherein a first part comprises the suction tube (12), and a second part - preferably detachable from the first part - comprises the pipette tip (14), wherein a disposable element (14) is used as the second part, and wherein it is determined from the frequency-dependent attenuation signal in the frequency range whether or not the pipette (10) is complete - especially, whether or not the detachable second part of the pipette (14) is present.

9. Pipetting method for pipetting liquid using a pipette (10) comprising a suction tube (12) and a pipette tip (14), in which a method according to one of claims 1 through 8 is applied to check whether or not the pipette tip (14) is in contact with a liquid (22) which is to be pipetted, and liquid is sucked into the pipette upon the pipette tip entering the liquid, wherein the pipette (10) is lowered from a point above the surface (22) of the liquid to be pipetted in direction (A) of the liquid, and, during the lowering movement, the frequency-dependent attenuation in the frequency range is measured in order to determine, from a change in the frequency-dependent attenuation signal, the time point at which the pipette tip (14) touches the liquid's surface (22), and wherein the depth to which the pipette (10) is immersed in a liquid is deduced from the frequency-dependent attenuation signal - preferably, by comparison with at least one reference signal and, especially preferably, by comparison with reference signals combined into a calibration curve.

10. Pipetting method for pipetting liquids with a pipette (10) which comprises a suction tube (12) and a pipette tip (14), in which a method according to one of claims 1 through 8 is applied to check whether or not the pipette (10) contains liquid, and the amount of liquid in the pipette (10) is deduced from the frequency-dependent attenuation signal - preferably, by comparison with at least one reference signal and, especially preferably, by comparison with reference signals combined into a calibration curve.

11. Pipetting method for pipetting liquids with a pipette (10) which comprises a suction tube (12) and a pipette tip (14), in which a method according to one of claims 1 through 8 is applied to check whether or not the pipette contains liquid, and the type of liquid in the pipette (10) is deduced from the frequency-dependent attenuation signal - preferably, by comparison with at least one reference signal.

12. Pipetting method for pipetting liquids with a pipette (10) which comprises a suction tube (12) and a pipette tip (14), in which a method according to one of claims 1 through 8 is applied to check whether or not the pipette (10) has drained fully after the pipetting procedure.

13. Suction tube arrangement for a pipetting device for pipetting liquid for carrying out a method according to one of claims 1 through 12, with
- an ultrasonic transducer (18) mounted on a suction tube (12) for coupling ultrasound into the wall of the suction pipe (12), wherein the ultrasonic transducer (18) is mounted on the wall of the suction pipe (12) and wherein, to increase sensitivity, an additional mass (19) is mounted on the side of the ultrasonic transducer (18) facing away from the suction tube,
- a control device for controlling the ultrasonic transducer (18) for emitting an ultrasonic signal within a pre-specified frequency range,
- a receiving device (18) for receiving an attenuated ultrasonic signal, and
- a suction device, with the help of which underpressure can be created in the suction tube in order to suck liquid into or through the suction tube.

14. Pipetting device with a pipette (10) of at least two parts, wherein a first part comprises the suction tube arrangement according to claim 13 and a second part comprises a pipette tip (14), and wherein the at least two parts can be detached from each other.

## Revendications

1. Procédé de vérification de l'état d'une pipette (10), comprenant un tube d'aspiration (12) et un embout de pipette (14), dans lequel
- des ultrasons sont couplés dans la paroi du tube d'aspiration (12), dans lequel les ultrasons sont générés avec un actionneur piézoélectrique (18) et l'actionneur piézoélectrique est monté sur la paroi du tube d'aspiration (12), et dans lequel, pour augmenter la sensibilité, une masse supplémentaire (19) est montée sur la paroi de l'actionneur piézoélectrique (18) tournée à l'écart du tube d'aspiration (12),
- l'atténuation du signal ultrasonore est mesurée en fonction de la fréquence au sein d'un intervalle de fréquence,
- en comparant l'atténuation en fonction de la fréquence mesurée dans l'intervalle de fréquence avec au moins une mesure de référence de l'atténuation en fonction de la fréquence ou à une courbe d'étalonnage basée sur des mesures de référence, on détermine si, oui ou non, la pipette (14) contient ou est en contact avec du liquide.

2. Procédé selon la revendication 1, dans lequel l'atténuation en fonction de la fréquence est évaluée dans l'intervalle de fréquence dans lequel se trouve au moins un mode propre du signal mesuré, dans lequel, pour la comparaison, la fréquence de résonance et/ou l'amplitude de résonance dudit au moins un mode propre sont comparées.

3. Procédé selon l'une des revendications 1 ou 2, dans lequel les ultrasons sont couplés dans la paroi du tube d'aspiration (12) d'une manière telle que des modes principalement transversaux sont excités.

4. Procédé selon l'une des revendications 1 à 3, dans lequel l'actionneur piézoélectrique (18) comprend de préférence une céramique en titanate-zirconate de plomb (PZT) et dans lequel, pour augmenter la sensibilité, une masse supplémentaire (19) agissant conjointement avec l'actionneur piézoélectrique (18) a de préférence une masse se situant dans la plage entre 0,1 et 10 fois le poids du tube d'aspiration.

5. Procédé selon la revendication 4, dans lequel la masse supplémentaire (19) est collée au côté de l'actionneur piézoélectrique (18) tourné à l'écart du tube d'aspiration (12).

6. Procédé selon l'une des revendications 4 ou 5, dans lequel l'actionneur piézoélectrique (18) est également utilisé pour la réception du signal ultrasonore atténué.

7. Procédé selon l'une des revendications 1 à 6, dans lequel les fréquences ultrasonores utilisées pour mesurer l'atténuation en fonction de la fréquence sont choisies parmi une plage de 1 à 10 fois le quotient de la vitesse du son dans le matériau de la pipette et une dimension géométrique caractéristique de la pipette, de préférence, la longueur.

8. Procédé selon l'une des revendications 1 à 7, dans lequel une pipette (10) d'au moins deux parties est utilisée, dans lequel une première partie comprend le tube d'aspiration (12), et une deuxième partie, de préférence détachable de la première partie, comprend l'embout de pipette (14), dans lequel un élément jetable (14) est utilisé en tant que deuxième partie, et dans lequel on détermine à partir du signal d'atténuation en fonction de la fréquence dans l'intervalle de fréquence si la pipette (10) est ou non complète, en particulier, si la deuxième partie détachable de la pipette (14) est ou non présente.

9. Procédé de pipetage pour pipeter un liquide à l'aide d'une pipette (10) comprenant un tube d'aspiration (12) et un embout de pipette (14), dans lequel un procédé selon l'une des revendications 1 à 8 est appliqué pour vérifier si l'embout de pipette (14) est en contact ou non avec un liquide (22) qui est destiné à être pipeté, et le liquide est aspiré dans la pipette lorsque l'embout de pipette pénètre dans le liquide, dans lequel la pipette (10) est abaissée à partir d'un point au-dessus de la surface (22) du liquide destiné à être pipeté dans la direction (A) du liquide et, pendant le mouvement d'abaissement, l'atténuation en fonction de la fréquence dans l'intervalle de fréquence est mesurée afin de déterminer, à partir d'une variation du signal d'atténuation en fonction de la fréquence, le moment auquel l'embout de pipette (14) touche la surface (22) du liquide, et dans lequel la profondeur à laquelle la pipette (10) est immergée dans un liquide est déduite du signal d'atténuation en fonction de la fréquence, de préférence, par comparaison avec au moins un signal de référence et, de manière particulièrement préférable, par comparaison avec des signaux de référence combinés dans une courbe d'étalonnage.

10. Procédé de pipetage pour pipeter des liquides avec une pipette (10) qui comprend un tube d'aspiration (12) et un embout de pipette (14), dans lequel un procédé selon l'une des revendications 1 à 8 est appliqué pour vérifier si la pipette (10) contient ou non du liquide, et la quantité de liquide dans la pipette (10) est déduite du signal d'atténuation en fonction de la fréquence, de préférence, par comparaison avec au moins un signal de référence et, de manière particulièrement préférable, par comparaison avec des signaux de référence combinés dans une courbe d'étalonnage.

11. Procédé de pipetage pour pipeter des liquides avec une pipette (10) qui comprend un tube d'aspiration (12) et un embout de pipette (14), dans lequel un procédé selon l'une des revendications 1 à 8 est appliqué pour vérifier si la pipette contient ou non du liquide, et le type de liquide dans la pipette (10) est déduit du signal d'atténuation en fonction de la fréquence, de préférence, par comparaison avec au moins un signal de référence.

12. Procédé de pipetage pour pipeter des liquides avec une pipette (10) qui comprend un tube d'aspiration (12) et un embout de pipette (14), dans lequel un procédé selon l'une des revendications 1 à 8 est appliqué pour vérifier si la pipette (10) s'est vidée complètement ou non après la procédure de pipetage.

13. Agencement de tube d'aspiration destiné à un dispositif de pipetage pour pipeter un liquide pour effectuer un procédé selon l'une des revendications 1 à 12, avec
- un transducteur ultrasonore (18) monté sur un tube d'aspiration (12) pour couplage d'ultrasons dans la paroi du tuyau d'aspiration (12), dans lequel le transducteur ultrasonore (18) est monté sur la paroi du tube d'aspiration (12) et dans lequel, pour augmenter la sensibilité, une masse supplémentaire (19) est montée sur le côté du transducteur ultrasonore (18) tourné à l'écart du tube d'aspiration,
- un dispositif de commande permettant de commander le transducteur ultrasonore (18) pour émettre un signal ultrasonore au sein d'un intervalle de fréquence préspécifié,
- un dispositif de réception (18) pour recevoir un signal ultrasonore atténué, et
- un dispositif d'aspiration, grâce auquel une dépression peut être créée dans le tube d'aspiration afin d'aspirer le liquide dans ou à travers le tube d'aspiration.

14. Dispositif de pipetage avec une pipette (10) d'au moins deux parties, dans lequel une première partie comprend l'agencement de tube d'aspiration selon la revendication 13 et une deuxième partie comprend un embout de pipette (14), et dans lequel lesdites au moins deux parties peuvent être détachées l'une de l'autre.
